## Europäisches Patentamt
## European Patent Office
## Office européen des brevets

(19)

(11) Veröffentlichungsnummer: **0 142 030**
**B1**

(12) **EUROPÄISCHE PATENTSCHRIFT**

(45) Veröffentlichungstag der Patentschrifft:
21.03.90

(51) Int. Cl. $^5$: **H 01 M  10/39**

(21) Anmeldenummer: 84112170.0

(22) Anmeldetag: 11.10.84

(54) Elektrochemische Speicherzelle.

(30) Priorität: 09.11.83 DE 3340424

(43) Veröffentlichungstag der Anmeldung:
22.05.85 Patentblatt 85/21

(45) Bekanntmachung des Hinweises auf die Patenterteilung:
21.03.90 Patentblatt 90/12

(84) Bennante Vertragsstaaten:
BE FR GB IT NL

(56) Entgegenhaltungen:
EP-A-0 064 656
FR-A-2 333 358
GB-A-2 083 686
GB-A-2 126 774
GB-A-2 127 615
US-A-4 048 393

(73) Patentinhaber: Asea Brown Boveri Aktiengesellschaft
Kallstadter Strasse 1
D-6800 Mannheim-Käfertal (DE)

(72) Erfinder: Hasenauer, Dieter, Ing. (grad.)
Freudenbergstrasse 13
D-6940 Weinheim (DE)
Erfinder: Hug, Kuno
Steinbachweg 14
D-6900 Heidelberg (DE)

(74) Vertreter: Rupprecht, Klaus, Dipl.-Ing.
c/o Asea Brown Boveri Aktiengesellschaft
Zentralbereich Patente Postfach 100351
D-6800 Mannheim 1 (DE)

EP 0 142 030 B1

LIBERGRAF, STOCKHOLM 1990

## Beschreibung

Die Erfindung bezieht sich auf eine elektrochemische Speicherzelle gemäß dem Oberbegriff des Patentanspruches 1.

Solche elektrochemischen Speicherzellen finden in vermehrten Maße ihre Anwendung in Hochtemperatur-Speicherbatterien, die als Energiequellen von Elektrofahrzeugen dienen.

Wiederaufladbare elektrochemische Speicherzellen auf der Basis von Alkalimetall und Chalkogen, deren Reaktantenräume durch einen Festelektrolyten voneinander getrennt sind eignen sich sehr gut zum Aufbau von Hochtemperatur-Speicherbatterien. Die in den Speicherzellen verwendeten Festelektrolyten, die beispielsweise aus Betaaluminiumoxid gefertigt sind, zeichnen sich dadurch aus, daß die Teilleitfähigkeit der beweglichen Ionen durch sie hindurch sehr hoch und die Teilleitfähigkeit der Elektronen um viele Zehnerpotenzen kleiner ist.

Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist, und die Reaktionssubstanzen auch nicht als neutrale Teilchen durch den Festelektrolyten gelangen können. Ein Vorteil dieser Speicherzellen besteht darin, daß beim Laden keine elektrochemischen Nebenreaktionen ablaufen. Der Grund dafür ist wiederum, daß nur eine Ionensorte durch den Festelektrolyten gelangen kann. Die Stromausbeute einer solchen Speicherzelle liegt daher etwa bei 100 %.

Probleme treten bei diesen Speicherzellen lediglich nur noch in den Bereichen auf, in denen keramische und metallische Bauelemente miteinander verbunden sind. Dies ist insbesondere im Bereich des Zellenverschlusses der Fall, wo der mit dem Festelektrolyten verbundene Isolierring mit dem Gehäuse der Speicherzelle direkt oder über ein weiteres metallisches Bauelement verbunden ist. Aus der DE-OS-3 033 438 ist eine elektrochemische Speicherzelle bekannt, bei der die miteinander zu verbindenden keramischen und metallischen Bauelemente durch die Anwendung eines Thermokompressionsverfahrens miteinander verbunden sind. Flächige Aluminiumelemente, die beispielsweise als Ringscheiben ausgebildet sind, werden zwischen die beiden zu verbindenden Bauelemente angeordnet und dienen als Haftvermittler. Da bei diesem Thermokompressionsverfahren die zu verbindenden Bauelemente durch plastisch fließendes Aluminium unter dem Einfluß von Druck und Wärme aneinandergefügt werden, muß mit einer Aluminiumdeformation von mindestens 50 % gearbeitet werden. Die für die Herstellung der Speicherzelle verwendeten Bauelemente sind vorzugsweise aus Stahl oder Edelstahl gefertigt. Die aus solchen Materialien gefertigten Bauelemente der Speicherzelle neigen sehr leicht zur Korrosion, was die Langlebigkeit einer Speicherzelle sehr stark reduziert. Insbesondere wird durch korrodierte Bauelemente die Wirkung des Speicherzellenverschlusses stark gemindert, so daß eine optimale Abdichtung der Speicherzelle nach außen hin, insbesondere eine Abdichtung ihrer Reaktantenräume nach relativ kurzer Zeit nicht mehr gesichert ist.

Aus der EP-A-0 064 656 ist eine elektrochemische Speicherzelle bekannt, die einen Festelektrolyten aufweist, der am oberen Ende mit einem nach außen und innen weisenden Isolierring ausgerüstet ist. Dieser aus Keramik gefertigte Isolierring wird über eine Aluminiumscheibe mit dem Verschlußelement, das aus einem Edelmetall gefertigt ist, durch Thermokompression verbunden. Bei einer anderen Ausführungsform dieser bekannten Speicherzelle wird der Isolierring unmittelbar durch Thermokompression mit dem Verschlußelement verbunden, wenn dieses aus Aluminium gefertigt ist.

In der FR-A-2 333 358 ist eine elektrochemische Speicherzelle beschrieben, deren Festelektrolyt einen Isolierring aufweist, der als nach außen gerichteter Flansch genutzt wird. Der Isolierring ist mit dem Gehäuse und einem Vorratsbehälter durch Zwischenfügen jeweils eines Aluminiumrings dauerhaft verbunden.

GB-A-2 083 686, aus dieser Entgegenhaltung ist eine elektrochemische Speicherzelle bekannt, die ebenfalls mit einem Festelektrolyten ausgerüstet ist, der an seinem oberen offenen Ende mit einem Isolierring versehen ist. Die Ober- und Unterseite dieses Isolierrings wird durch eine Ringscheibe aus Aluminium geschützt. Diese Ringscheiben sind dauerhaft mit dem Isolierkörper und Bauelementen des Gehäuses sowie mit dem Deckel der Speicherzelle verbunden.

Der Erfindung liegt ausgehend von dem eingangs genannten Stand der Technik die Aufgabe zugrunde, den Verschluß einer Speicherzelle, insbesondere die Verbindung von metallischen und keramischen Bauelementen im Bereich des Verschlusses so zu verbessern, daß eine Korrosion der metallischen Bauelemente vermieden und die Speicherzelle auch den während des Betriebs auftretenden mechanischen Belastungen standhalten kann.

Diese Aufgabe wird erfindungsgemäß durch die Merkmale des Patentanspruches 1 gelöst.

Erfindungsgemäß werden die Verstärkungselemente aus dispersionsgehärtetem Aluminium oder Alphaaluminiumoxid hergestellt. Werden die metallischen und keramischen Bauelemente durch eine radiale Thermokompression miteinander verbunden, so werden Verstärkungselemente verwendet, die als einseitig geschlitzte Ringe ausgebildet sind. Für die radiale Thermokompression können auch mehrere Einzelteile aus dem oben genannten Material als Verstärkungselement benutzt werden. Bei der Verbindung der keramischen und metallischen Bauelemente durch eine axiale Thermokompression werden vorzugsweise gelochte Scheiben aus dispersionsgehärtetem Aluminium oder aus Alphaaluminiumoxid verwendet. Erfindungsgemäß werden die Verstärkungselemente mit den aus Aluminium gefertigten Verschlußelementen bei etwa 600°C und unter Einwirkung eines hohen Drucks verbunden. Gleichzeitig werden die Verschlußelemente mit dem keramischen Isolierring zusammengefügt. Die Verschlußelemente aus Aluminium oder dispersionsgehärtetem Aluminium weisen im Fügebereich nur eine Wandstärke von 0,1 bis 0,3 mm auf. Während des Thermokompressionsverfahrens werden diese Verschlußelemente plastisch verformt. Das Aluminium der Verschlußelemente verbindet sich während der Thermokompression mit dem aus Alphaaluminium gefertigten Isolierring des Festelektrolyten bzw. den aus dem gleichen Material gefertigten Verstärkungselementen über eine chemische Bindung. Gleichzeitig verschweißt das Aluminium der Verschlußelemente mit den aus dispersionsgehärtetem Aluminium hergestellten Verstärkungselementen direkt. Dadurch, daß die Verschlußelemente aus Aluminium gefertigt sind, ist eine kurze Fertigungszeit möglich, da keine zusätzlichen Diffusionsschichten auszubilden sind, wie dies bei der Verwendung von metallischen Bauelementen aus Stahl oder Edelstahl der Fall ist. Bei Verwendung von Verstärkungselementen, die aus Alphaaluminiumoxid gefertigt sind, tritt durch die Einwirkung der Thermokompression kaum eine Verformung auf, da sie eine sehr hohe Warmfestigkeit besitzen. Im Gegensatz zu Verstärkungselementen aus dispersionsgehärtetem Aluminium müssen Verstärkungselemente aus Alphaaluminiumoxid eine größere Wandstärke aufweisen. Vorzugsweise benötigten diese Verstärkungselemente eine Wandstärke von 1 bis 4 mm. Deshalb sind diese Verstärkungselemente schwerer und voluminöser als die Verstärkungselemente aus dispersionsgehärtetem Aluminium. Es kann jedoch mit ihnen die gleiche Wirkung bezüglich der Verstärkung der Verschlußelemente erreicht werden, so daß im Bedarfsfall, insbesondere dann wenn die Verwendung von Verstärkungselementen aus dispersionsgehärtetem Aluminium nicht möglich ist, eine ebensogute Verbindung erzielt wird.

Weitere erfindungswesentliche Merkmale sind in den Unteransprüchen gekennzeichnet.

Die Erfindung wird nachfolgend anhand von schematischen Zeichnungen erläutert.

Es zeigen:

Figur 1  Eine elektrochemische Speicherzelle,
Figur 2  die Herstellung dieser Speicherzelle,
Figur 3  eine Variante der erfindungsgemäßen Speicherzelle,
Figur 4  eine weitere Ausführungsform der Speicherzelle.

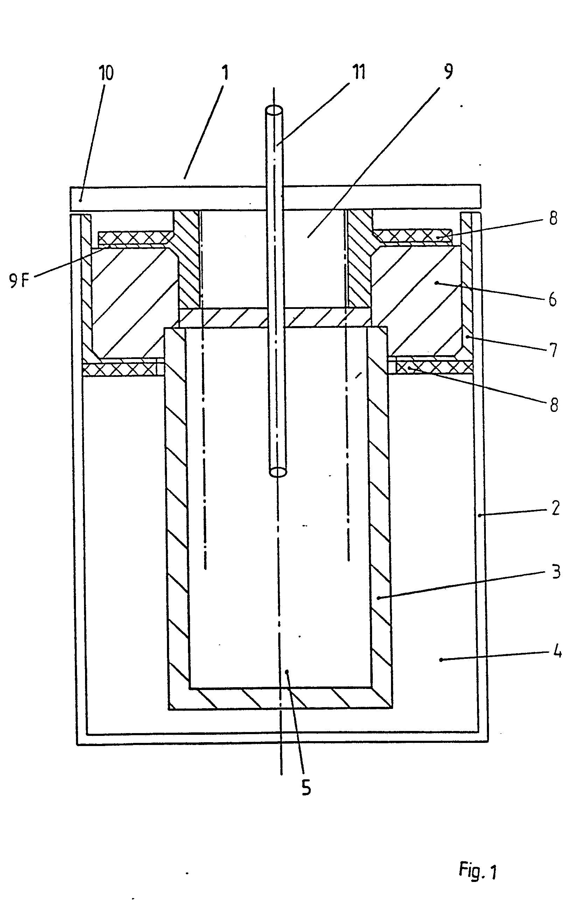

Die in Figur 1 dargestellte elektrochemische Speicherzelle 1 wird im wesentlichen durch ein metallisches Gehäuse 2 und einen Festelektrolyten 3 gebildet. Das metallische Gehäuse 2 ist aus Aluminium gefertigt und becherförmig ausgebildet. Im Inneren des metallischen Gehäuses 2 ist ein ebenfalls becherförmiger Festelektrolyt 3 angeordnet. Er ist aus Betaaluminiumoxid gefertigt. Seine Abmessungen sind so gewählt, daß zwischen seinen Außenflächen und den Innenflächen des Gehäuses 2 rundum ein zusammenhängender Zwischenraum 4 gebildet wird, der als Reaktandenraum, insbesondere als Kathodenraum dient. Dieser ist mit einem mit Schwefel getränkten Graphit (hier nicht dargestellt) vollständig ausgefüllt. Der Innenraum des Festelektrolyten 3 dient als zweiter Reaktandenraum, insbesondere als Anodenraum, der mit Natrium ausgefüllt ist. Am oberen offenen Ende ist der Festelektrolyt 3 mit einem Isolierring 6 verbunden, der aus Alphaaluminiumoxid gefertigt ist. Der Isolierring 6 ist mit Hilfe eines Glaslotes (hier nicht dargestellt) mit dem Festelektrolyten 3 verbunden. Der Isolierring 6 ist so ausgebildet und derart mit dem Festelektrolyten 3 verbunden, daß er einen nach außen gerichteten Flansch bildet. Zur Halterung des Festelektrolyten 3 innerhalb der Speicherzelle wird der Isolierring 6 mit dem metallischen Gehäuse indirekt verbunden. Hierfür wird die dem Kathodenraum 4 zugewandte Unterseite des Isolierrings 6 und die seitliche Begrenzungsfläche desselben von einer becherförmigen Hülle 7 umgeben, aus deren Boden der obere Teil des Festelektrolyten 3 nach oben übersteht. Die becherförmige Hülle 7 ist aus dispersionsgehärtetem Aluminiums gefertigt. Sie ist an ihrem dem Kathodenrauemi 4 zugewandten Boden sehr dünnwandig ausgebildet. Die seitliche Begrenzungsfläche der Hülle 7 ist so bemessen, daß der zwischen den Isolierring 6 und dem Gehäuse 2 verbleibende Raum durch sie vollständig ausgefüllt ist. Auf der Unterseite der Hülle 7, insbesondere auf der Außenfläche ihres Bodens ist ein Verstärkungselement 8 angeordnet. Bei dem hier dargestellten Ausführungsbeispiel hat das Verstärkungselement 8 die Form einer Ringscheibe und ist aus dispersionsgehärtetem Aluminium gefertigt. Die Abmessungen der Hülle 7 sind so bemessen, daß ihr nach oben gerichteter Rand mit dem oberen Rand des metallischen Gehäuses 2 abschließt. Die Hülle 7 ist mit dem metallischen Gehäuse 2 verschweißt. Auf den Festelektrolyten 3 ist ein Vorratsbehälter 9 für Natrium aufgesetzt, dessen Boden den Innenraum des Festelektrolyten 3 verschließt. Über Öffnungen (hier nicht dargestellt) steht dieser Vorratsbehälter 9 mit dem Innenraum, insbesondere dem Anordenraum 5 in Verbindung.

Der Vorratsbehälter 9 ist mit einem nach außen gerichteten Flansch 9F versehen, der ebenso wie der Vorratsbehälter 9 aus reinem Aluminium gefertigt ist. Der Flansch 9F ist sehr dünnwandig ausgebildet und so angeordnet, daß er auf der Oberfläche des Isolierringes 6 abgestützt werden kann. Auf dem Flansch 9F ist ein weiteres Verstärkungselement 8 in Form einer Ringscheibe angeordnet. Die Wandstärke des Flansches 9F wird in dem Bereich, in dem der Flansch 9F mit dem Vorratsbehälter 9 verbunden ist, allmählich dicker. Die Ringscheibe 8 ist in diesem Bereich abgeschrägt, so daß auch der allmählich dicker werdende Bereich des Flansches 9F noch durch das Verstärkungselement 8 gestützt ist.

Die Speicherzelle 1 wird nach obenhin durch eine Verschlußplatte 10 verschlossen, die auf dem oberen Rand des metallischen Gehäuses 2 und des Vorratsbehälters 9 aufliegt und fest mit diesen verbunden ist, derart, daß die Speicherzelle nach außen dicht verschlossen ist. In den Innenraum des Festelektrolyten 3 ragt ein anodischer Stromabnehmer 11 in Form eines Stabes. Der Stab durchsetzt den Vorratsbehälter 9 und die Verschlußplatte 10 der Speicherzelle 1 und überragt die Verschlußplatte 10 um einige Millimeter nach außen hin.

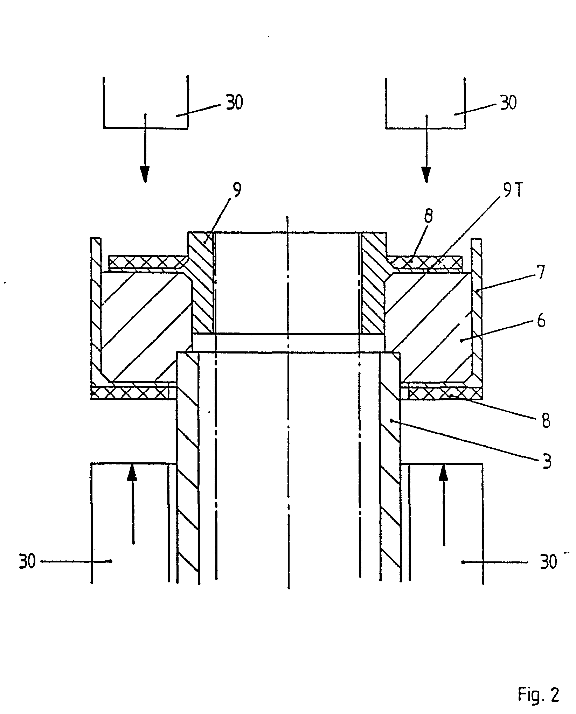

Erfindungsgemäß werden die keramischen und metallischen Bauelemente der Speicherzelle durch Thermokompression miteinander verbunden. Die Verbindung des Isolierringes 6 mit der becherförmigen Hülle 7 und dem Flansch 9F des Vorratsbehälters 9 sowie die gleichzeitige Verbindung der Verstärkungselemente 8 mit der Hülle 7 bzw. dem Flansch 9F ist in Figur 2 dargestellt. Insbesondere zeigt Figur 2 den in Figur 1 innerhalb des Gehäuses 2 dargestellten Festelektrolyten 3 mit dem aufgesetzen Vorratsbehälter 9. Der Isolierring 6, welcher mit dem Festelektrolyten 3 über ein Glaslot (hier nicht dargestellt) verbunden ist, wird wie oben beschrieben, von der becherförmigen Hülle 7 umgeben. Der Flansch 9F des Vorratsbehälters 9 liegt auf dem Isolierring 6 auf. Gegen die Unterseite der Hülle 7 ist das Verstärkungselement 8 gesetzt, während das zweite Verstärkungselement auf dem Flansch 9F aufliegt. Bei der Fertigung der Speicherzelle werden zunächst diese hier dargestellten Bauelemente durch Thermokompression verbunden. Hierfür werden Press-Stempel 30 verwendet. Solche Press-Stempel sind über dem Verstärkungselement 8 angeordnet, das auf dem Flansch 9F aufliegt. Wie anhand von Figur 2 zu sehen ist, werden weitere Press-Stempel 30 so angeordnet, daß sie gegen die Unterseite des zweiten Verstärkungselementes 8 gepreßt werden können, das gegen die Unterseite der Hülle 9 gesetzt ist. Diese Press-Stempel 30 werden mit einer sehr großen Kraft und bei einer Temperatur von etwa 600°C gegen die Verstärkungselemente 8 gedrückt. Hierdurch wird eine feste Verbindung zwischen dem Isolierring 6 und der Hülle 7 sowie dem Flansch 9F erreicht. Gleichzeitig werden die beiden Verstärkungselemente 8 mit der Hülle 7 bzw. mit dem Flansch 9F ebenfalls dauerhaft verbunden. Nachdem der Isolierring 6 auf diese Weise mit der Hülle 7 und dem Vorratsbehälter 9 verbunden ist, wird der Festelektrolyt 3 zusammen mit diesen Bauelementen in das metallische Gehäuse 2 eingesetzt. Anschließend wird der obere Rand der Hülle 7 mit dem oberen Rand des metallischen Gehäuses verschweißt. Der Kathodenraum wird vor dem Einsetzen des Festelektrolyten 3 mit Graphit und Schwefel ausgefüllt. Ein Verschließen der Speicherzelle 1 mit der Verschlußplatte 10 erfolgt nach dem Füllen des Anodenraums und des Vorratsbehälters 9 mit Natrium.

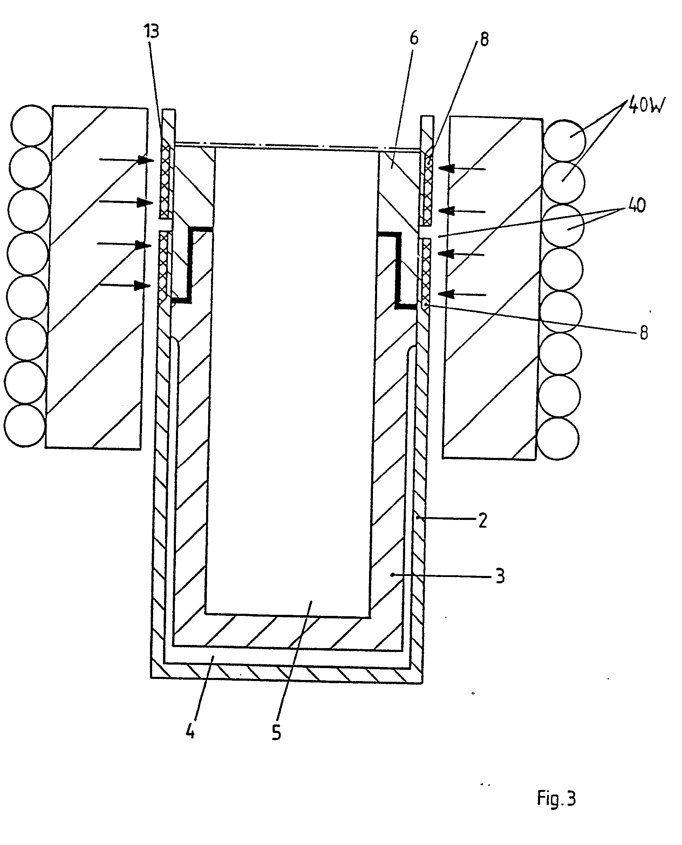

Bei der in Figur 3 dargestellten Variante der Speicherzelle 1 ist ebenfalls ein metallisches Gehäuse 2 vorgesehen, welches die Begrenzung dieser Speicherzelle 1 nach außenhin bildet. Das metallische Gehäuse 2 ist becherförmig ausgebildet und aus Aluminium gefertigt. Im Inneren des metallischen Gehäuses 2 ist wiederum ein Festelektrolyt 3 aus Betaaluminiumoxid angeordnet. Seine Abmessungen sind so gewählt, wie bei dem in Figur 1 dargestellten und in der dazugehörigen Beschreibung erläuterten Festelektrolyten 3. Am oberen offenen Ende des Festelektrolyten 3 ist ein Isolierring 6 angeglast. Der Isolierring 6 ist so ausgebildet, daß er einen nach außen weisenden Flansch bildet, der mit dem metallischen Gehäuse 2 der Speicherzelle direkt verbunden ist. Erfindungsgemäß wird der Isolierring 6 unter Anwendung des Thermokompressionsverfahrens mit dem metallischen Gehäuse 2 verbunden. Das metallische Gehäuse 2 ist deshalb im Bereich des Isolierrings 6 speziell ausgebildet. Die Wandstärke des metallischen Gehäuses 2 ist in diesem Bereich auf etwa die Hälfte reduziert. Bei dem in Figur 3 dargestellten Ausführungsbeispiel wird dies dadurch erreicht, daß auf der Außenseite des metallischen Gehäuses 2 eine U-förmige Vertiefung 13 vorgesehen ist. Die Breite dieser U-förmigen Vertiefung ist an die Höhe des Isolierringes 6 angepaßt. Die seitlichen Begrenzungsflächen der U-förmigen Vertiefung sind abgeschrägt, derart, daß sich die U-förmige Vertiefung nach außen zu verbreitert. In die U-förmige Vertiefung sind zwei als Ringe ausgebildete Verstärkungselemente 8 eingelegt. Der Innendurchmesser der ringförmigen Verstärkungselemente 8 ist an den Außendurchmesser des metallischen Gehäuses 2 im Bereich der U-förmigen Vertiefung 13 angepaßt. Die beiden ringförmigen Verstärkungselemente sind etwa in der Mitte der U-förmigen Vertiefung 13 durch einen Spalt von einigen Millimetern Breite voneinander getrennt. Im Bereich der seitlichen Begrenzungsflächen der U-förmigen Ausnehmung 13 sind die ringförmigen Verstärkungselemente 8 ebenfalls abgeschrägt, derart, daß sie an den seitlichen Begrenzungsflächen der U-förmigen Vertiefung 13 anliegen. Die Dicke der beiden Verstärkungselemente 8 ist so gewählt, daß ihre nach außen gerichteten Begrenzungsflächen in einer Ebene mit der seitlichen Außenfläche des metallischen Gehäuses 2 liegen.

Erfindungsgemäß wird das metallische Gehäuse 2 durch Anwendung des Thermokompressionsverfahrens sowohl mit dem Isolierring 6 als auch mit den Verstärkungselementen 8 verbunden. Der für die Thermokompression erforderliche Preßdruck wird mit einer Magnetspule 40 erzeugt, die so angeordnet ist, daß ihre Windungen 40W senkrecht zur Längsachse des metallischen Gehäuses 2 verlaufen. Werden die Windungen 40W der Magnetspule von einem entsprechend großen Spulenstrom durchflossen, so kommt es zur Ausbildung eines beachtlich großen Maxwelschen-Drucks. Dieser Druck ist senkrecht auf die Außenflächen der Verstärkungselemente 8 gerichtet. Durch die Anordnung eines entsprechenden Werkzeuges (hier nicht dargestellt) im Inneren des Festelektrolyten 3 kann ein entsprechender Gegendruck erzeugt werden, so daß in einem Arbeitsgang sowohl die Verstärkungselemente 8 als auch der Isolierring 6 mit dem metallischen Gehäuse 2 verbunden werden können. Außer den entsprechenden Druckkräften wird für die Verbindung der Bauelemente eine Temperatur von etwa 600°C benötigt.

Das Verbinden dieser Bauteile erfolgt im Anschluß an die Füllung des Kathodenraums 4, der zwischen dem Festelektrolyten 3 und dem metallischen Gehäuse 2 vorgesehen ist. Erfindungsgemäß ist hierin ein mit Schwefel getränkter Graphitfilz (hier nicht dargestellt) angeordnet. Nach dem Verbinden der Bauelemente durch das Thermokompressionsverfahren wird der Anodenraum 5, mit Natrium gefüllt. Als Anodenraum 5 wird das Innere des Festelektrolyten 3 genutzt. Der Anodenraum 5 wird bei dem hier dargestellten Ausführungsbeispiel mit Natrium (hier nicht dargestellt) gefüllt. Der Verschluß der Speicherzelle nach außenhin erfolgt beispielsweise durch eine Verschlußplatte (hier nicht dargestellt), die mit dem oberen Rand des metallischen Gehäuses 2 dauerhaft verbunden wird. Bei dem hier dargestellten Ausführungsbeispiel ist der Kathodenraum 4 durch den Isolierring 6, der bis zum metallischen Gehäuse 2 geführt ist, verschlossen, wodurch eine sichere Abtrennung zwischen beiden Reaktandenräumen erreicht wird.

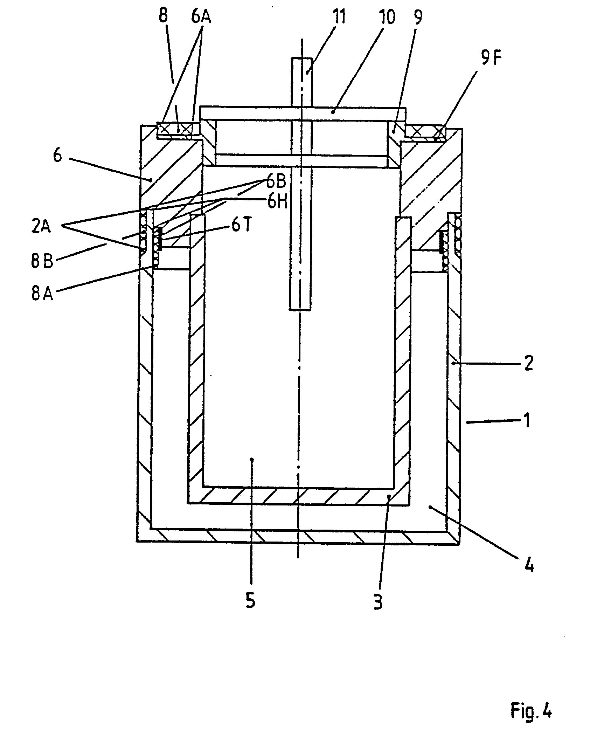

Figur 4 zeigt eine Speicherzelle 1, die ebenfalls ein metallisches Gehäuse 2 aufweist und im Inneren mit einem Festelektrolyten 3 ausgerüstet ist. Das metallische Gehäuse 2 ist becherförmig ausgebildet und aus Aluminium gefertigt. Der Festelektrolyt 3 ist ebenfalls becherförmig ausgebildet und aus Betaaluminiumoxid hergestellt. Abweichend von den in den Figuren 1 bis 3 dargestellten Ausführungsbeispielen von Speicherzellen wird die hier dargestellte und beschriebene Variante nicht vollständig durch das metallische Gehäuse begrenzt. Vielmehr ist dieses nur bis zur Mitte des mit dem Festelektrolyten 3 verbundenen Isolierringes 6 geführt. Der Isolierring 6 ist am oberen Ende des Festelektrolyten 3 angeglast und so ausgebildet, daß er einen nach außen gerichteten Flansch bildet. Die Abmessungen des Isolierringes sind so gewählt, daß er mit seinem oberen Teil auf der Oberkante des metallischen Gehäuses 2 aufgesetzt und abgestützt werden kann. Hierdurch wird der zwischen dem Gehäuse 2 und dem Festelektrolyten 3 angeordnete Kathodenraum fest verschlossen. Der Kathodenraum ist auch bei diesem Ausführungsbeispiel mit einem mit Schwefel getränkten Graphit ausgefüllt (hier nicht dargestellt). Der Isolierring 6 ist auf seiner nach oben weisenden Begrenzungsfläche mit einer Ausnehmung 6A, die rundum geführt ist, versehen. Eine zweite Ausnehmung 6B befindet sich im unteren seitlichen Begrenzungsbereich des Isolierringes 6. Diese Ausnehmung 6B ist stufenförmig ausgebildet und in ihren Abmessungen so gewählt, daß sie sowohl das obere Ende des metallischen Gehäuses 2 als auch zwei weitere Verstärkungselemente 8A und 8B aufnehmen kann. Wie anhand von Figur 4 zu sehen ist, ist im tiefer liegenden Stufenteil 6T das ringförmige Verstärkungselement 8A eingebettet, dessen zweite Hälfte über die untere Begrenzungsfläche des Isolierrings 6 übersteht und in den Kathodenraum 4 hineinragt. In dem höher gelegenen Stufenteil 6H der Ausnehmung 6B ist das obere Ende des metallischen Gehäuses 6 sowie ein zweites ringförmiges Verstärkungselement 8B angeordnet. Die Wandstärke des metallischen Gehäuses ist am oberen Ende desselben auf etwa die Hälfte reduziert, und zwar derart, daß in der Außenfläche des metallischen Gehäuses eine rundum geführte Ausnehmung 2A gebildet wird, in die das Verstärkungselement 8B eingebettet ist. Die Dicke des zweiten Verstärkungselementes 8B, das in der Ausnehmung 2A angeordnet ist, ist so gewählt, daß die äußere Begrenzungsfläche des Verstärkungselementes 8B mit der seitlichen Begrenzung des Isolierringes 6 fluchtet. Die seitliche Begrenzung der Ausnehmung 2A ist so abgeschrägt, daß sich die Ausnehmung 2A nach außenhin verbreitert. Das in der Ausnehmung 2A angeordnete Verstärkungselement 8B ist in diesem Bereich ebenfalls abgeschrägt, so daß es bündig an die Begrenzungsflächen der Ausnehmung 2A anschließt. Durch die Abschrägung der Ausnehmung 2A wird ein kontinuierlicher Übergang von der normalen Wandstärke des metallischen Gehäuses in den dünneren Endbereich erzielt, und gleichzeitig eine an die entsprechende Wandstärke angepaßte Verstärkung bewirkt. Wie anhand von Figur 4 zu sehen ist, wird das obere Ende des metallischen Gehäuses in seinem unteren Teil durch das Verstärkungselement 8A und in seinem oberen Teil durch das Verstärkungselement 8B gestützt. Die Verbindung des metallischen Gehäuses 2 mit dem Isolierring 6 und den Verstärkungselementen 8A und 8B die wiederum durch die Einwirkung von Maxwelschen-Druckkräften durchgeführt werden kann. In der Ausnehmung 6A, die sich in der Stirnfläche des Isolierringes 6 befindet, ist der nach außen gerichtete Flansch 9F eines Vorratsbehälters 9 angeordnet. Der Vorratsbehälter 9 wird mit Natrium gefüllt, und ist über Öffnungen (hier nicht dargestellt) mit dem Innenraum des Festelektrolyten 3 verbunden, der als Anodenraum 5 dient. Auf dem Flansch 9F ist ein Verstärkungselement 8 in Form einer Ringscheibe angeordnet, welche die gleiche Breite wie der Flansch 9F hat. Durch die Einwirkung einer senkrecht gerichteten Thermokompression, insbesondere durch die Einwirkung von Druckstempeln 30, wie sie in Figur 2 dargestellt sind, wird der Flansch 9F mit dem Isolierring 6 und dem Verstärkungselement 8 verbunden. Die bei dem hier dargestellten Ausführungsbeispiel verwendeten Verstärkungselemente 8, 8A und 8B sind aus dispersionsgehärtetem Aluminium hergestellt. Falls es die Gegebenheiten erfordern, können die Verstärkungselemente auch aus einer Keramik, insbesondere aus Alphaaluminiumoxid hergestellt werden. Der Flansch 9F des Vorratsbehälters 9 ist aus Aluminium hergestellt. Seine Dicke entspricht etwa der Hälfte der Wandstärke des übrigen Vorratsbehälters 9, der ebenso wie der Flansch 9F aus einem reinen Aluminium gefertigt ist. Der Verschluß des Vorratsbehälters 9 erfolgt durch eine Verschlußplatte 10, die ebenfalls aus Aluminium gefertigt und mit dem übrigen Teil des Vorratsbehälters 9 verbunden ist. Ein anodischer Stromabnehmer in Form eines Stabes 11, ragt mit seinem ersten Ende in das Innere des Anodenraumes 5 hinein. Sein zweites Ende ist durch den Vorratsbehälter 9 hindurch geführt und steht einige Millimeter über die Verschlußplatte 10 der Speicherzelle über.

Die Erfindung beschränkt sich nicht nur auf die in den Figuren 1 bis 4 dargestellten Ausführungsbeispiele. Vielmehr umfaßt sie alle Speicherzellen, bei denen keramische Bauelemente mit dünnwandigen metallischen Bauelementen, insbesondere aus Aluminium verbunden sind, wobei die dünnwandigen metallischen Bauelemente durch Verstärkungselemente aus dispersionsgehärtetem Aluminium bzw. aus einer nichtleitenden Keramik gestützt sind. Wie den Ausführungsbeispielen zu entnehmen ist, dienen die Verstärkungselemente nicht nur der Stützung der metallischen dünnwandigen Bauelemente, vielmehr werden durch sie auch korrosiv wirkende Reaktanden bzw. Reaktionsprodukte von den dünnwandigen metallischen Bauelementen ferngehalten.

## Patentansprüche

1. Elektrochemische Speicherzelle (1) auf der Basis von Alkalimetall und Chalkogen mit einem Anodenraum (5) und einem Kathodenraum (4), die durch einen becherförmigen alkaliionenleitenden mit einem als Flansch dienenden keramischen Isolierring (6) versehenen Festelektrolyten (3) voneinander getrennt und wenigstens bereichsweise von einem metallischen Gehäuse (2) begrenzt sind, wobei der Isolierring (6) mit Verschlußelementen (2, 7, 9F) durch Thermokompression verbunden ist, *dadurch gekennzeichnet,* daß die Verschlußelemente (2, 7 und 9F) aus Aluminium oder dispersionsgehärtetem Aluminium gefertigt sind, ihre Wandstärken im Fügebereich gegenüber den übrigen Bereichen nur eine Dicke von 0,1 bis 0,3 mm aufweisen und durch Verstärkungselemente (8, 8A, 8B) aus dispersionsgehärtetem Aluminium oder Alphaaluminiumoxid gestützt sind, und daß die Verschlußelemente (2, 7 und 9F) durch Thermokompression mit dem Isolierring (6) und den Verstärkungselementen (8, 8A, 8B) verbunden sind.

2. Elektrochemische Speicherzelle nach Anspruch 1, dadurch gekennzeichnet, daß Verstärkungselemente (8, 8A, 8B), welche für eine axiale Thermokompression vorgesehen sind, als gelochte Scheiben, bzw. Ringscheiben ausgebildet sind.

3. Elektrochemische Speicherzelle nach Anspruch 1, dadurch gekennzeichnet, daß Verstärkungselemente (8, 8A, 8B), welche für eine radiale Thermokompression bestimmt sind, als einseitig geschlitzte Ringe oder als Ringsegmente ausgebildet sind.

## Claims

1. Electrochemical storage cell (1) based on alkali metal and chalcogen, having an anode space (5) and a cathode space (4) which are separated from one another by a cup-shaped alkali-ion-conducting solid electrolyte (3) which is provided with a ceramic insulating ring (6) used as flange and are bounded at least area by area by a metallic housing (2), the insulating ring (6) being joined to closing elements (2, 7, 9F) by thermal compression, characterized in that the closing elements (2, 7 and 9F) are manufactured of aluminium or dispersion-hardened aluminium, their wall thicknesses exhibit in the area of the joint, in contrast with the remaining areas, only a thickness of 0.1 to 0.3 mm and are supported by reinforcing elements (8, 8A, 8B) of dispersion-hardened aluminium or alpha aluminium oxide, and that the closing elements (2, 7 and 9F) are joined to the insulating ring (6) and the reinforcing elements (8, 8A, 8B) by thermal compression.

2. Electrochemical storage cell according to Claim 1, characterized in that reinforcing elements (8, 8A, 8B), which are provided for an axial thermal compression, are constructed as perforated discs or annular discs.

3. Electrochemical storage cell according to Claim 1, characterized in that reinforcing elements (8, 8A, 8B), which are intended for a radial thermal compression, are constructed as unilaterally slotted rings or as ring segments.

## Revendications

1. Cellule d'accumulateur électrochimique (1) à base de métal alcalin et de chalcogène, comportant un volume anodique (5) et un volume cathodique (4) qui sont séparés l'un de l'autre par un électrolyte solide conducteur d'ions alcalins, en forme de godet muni d'un anneau isolant céramique (6) servant de bride, et sont bordés, au moins par régions, par une enceinte métallique (2), l'anneau isolant (6) étant lié par thermocompression à des éléments obturateurs (2, 7, 9F), *caractérisée* par le fait que les éléments obturateurs (2, 7 et 9F) sont en aluminium ou en aluminium durci par précipitation, ont des parois qui, dans la région de leurs jonctions, n'ont qu'une épaisseur de 0,1 à 0,3 mm, différant de l'épaisseur dans les autres régions, et sont soutenus par des éléments de renforcement (8, 8A, 8B) en aluminium durci par précipitation ou en oxyde d'aluminium alpha, et par le fait que les éléments obturateurs (2, 7 et 9F) sont assemblés par thermocompression à l'anneau isolant (6) et aux éléments de renforcement (8, 8A, 8B).

2. Cellule d'accumulateur électrochimique selon revendication 1, caractérisée par le fait que les éléments de renforcement (8, 8A, 8B) qui sont prévus pour une thermocompression axiale sont réalisés en tant que plaques perforées ou encore en tant que disques annulaires.

3. Cellule d'accumulateur électrochimique selon revendication 1, caractérisée par le fait que les éléments de renforcement (8, 8A, 8B) qui sont destinés à une thermocompression radiale sont réalisés en tant qu'anneaux fendus d'un seul côté ou en tant que segments annulaires.

Fig. 1

Fig. 2

Fig. 3

Fig. 4